## Europäisches Patentamt
## European Patent Office
## Office européen des brevets

(11) Veröffentlichungsnummer: **0 057 755**
**B1**

(12) **EUROPÄISCHE PATENTSCHRIFT**

(45) Veröffentlichungstag der Patentschrift:
14.01.87

(21) Anmeldenummer: **81108817.8**

(22) Anmeldetag: **23.10.81**

(51) Int. Cl.⁴: **G 06 F 15/40**

(54) Mikrorechnersystem zum raschen Auffinden von Kennzeichenblöcken.

(30) Priorität: **11.02.81 DE 3104941**

(43) Veröffentlichungstag der Anmeldung:
**18.08.82 Patentblatt 82/33**

(45) Bekanntmachung des Hinweises auf die Patenterteilung:
**14.01.87 Patentblatt 87/3**

(84) Benannte Vertragsstaaten:
**AT BE CH FR GB IT LI NL SE**

(73) Patentinhaber: **Siemens Aktiengesellschaft Berlin und München, Wittelsbacherplatz 2, D-8000 München 2 (DE)**

(72) Erfinder: **Holzner, Peter, Ing.- grad., Otto- Wagner-Strasse 12, D-8034 Germering (DE)**
Erfinder: **Sedlmeier, Werner, Dipl.- Ing., Zielstattstrasse 25, D-8000 München 70 (DE)**

(56) Entgegenhaltungen:
US-A-4 128 899
US-A-4 145 737
US-A-4 152 762
US-A-4 197 588

IEEE TRANSACTIONS ON COMPUTERS, Band 26, Nr. 2, Februar 1977, Seiten 174-177, New York, USA, K.E. BATCHER: "The multidimensional access memory in STARAN"
AFIPS CONFERENCE PROCEEDINGS 1974, NATIONAL COMPUTER CONFERENCE, Band 43, 1974, Seiten 405-410, Montvale, USA, K.E. BATCHER: "STARAN parallel processor system hardware"
THE 6TH ANNUAL SYMPOSIUM ON COMPUTER ARCHITECTURE, 23.-25. April 1979, Seiten 102-110, IEEE, ACM, New York, USA, E. GOTO et al.: "FLATS, a machine for numerical, symbolic and

(56) Entgegenhaltungen: (Fortsetzung)
associative computing"
IBM TECHNICAL DISCLOSURE BULLETIN, Band 15, Nr. 7, Dezember 1972, Seiten 2342-2343, New York, USA, F. TSUI: "Associative-memory sequencing arrangement"
IBM TECHNICAL DISCLOSURE BULLETIN, Band 23, Nr. 9, Februar 1981, Seite 4308, New York, USA, J.R. LANDAU: "Parallel associative magnetic bubble memory"

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Mikrorechnersystem zur Datenverarbeitung und zum raschen Auffinden von mehreren Bytes umfassenden Kennzeichenblöcken gemäß dem Oberbegriff des Patentanspruchs 1.

Für viele Anwendungsfälle von Mikrorechnersystemen, z.B. aus der Funkvermittlung, ist es zweckmäßig, mit Kennzeichenblöcken zu arbeiten. Hierbei wird jedem Teilnehmer eine bestimmte Kombination zugeordnet und als Kennzeichenblock abgespeichert. An Hand der abgespeicherten Kennzeichenblöcke kann überprüft werden, ob der entsprechende Teilnehmer sich noch im Funkvermittlungsbereich befindet. Meldet sich aber ein Teilnehmer nicht in bestimmten zeitlichen Mindestabständen, so wird sein Kennzeichenblock gelöscht. Natürlich ist es auch möglich, außer dem Kennzeichenblock auch nachfolgend zugehörige Daten, beispielsweise Gebühren abzuspeichern. Die Verwendung von Kennzeichenblöcken ist keineswegs auf Vermittlungseinrichtungen beschränkt, sondern eignet sich für Dateien aller Art.

Aus dem Mikrocomputer User's Manual SAB 8085 der Fa. Siemens, Bestellnummer B1825.101, Seiten AI-6 und AI-7 ist ein Mikroprozessorsystem mit einer Blocksuchvorrichtung bekannt. Der Suchvorgang läuft hierbei über einen DMA-Controller ab. Der Vergleich erfolgt byteweise. Ist das gesuchte Byte gefunden, so gibt der Komparator ein Signal ab, das den Suchvorgang beendet.

Die beschriebene Schaltungsanordnung eignet sich besonders zum Aufsuchen von nur ein Byte langen Kennzeichenblöcken. Umfaßt ein Kennzeichenblock mehrere Bytes, so müssen diese einzeln nacheinander überprüft werden. Bei umfangreichen Dateien und mehreren Bytes umfassenden Kennzeichenblöcken steht die bei dem beschriebenen Verfahren erforderliche Suchzeit nicht mehr zur Verfügung.

In dem "IBM Technical Disclosure Bulletin" Vol. 23, No. 9, Febr. 1981 ist ein als magnetischer Datenspeicher (Bubble Memory) realisierter Assoziativspeicher mit parallel angeordneten Speicher-Untereinheiten beschrieben. Aus den Speicher-Untereinheiten ausgelesene Daten (jeweils 1 Byte) werden jeweils über einen Komparator, dem jeweils ein Byte einer gesuchten Kombination von einem Mikroprozessor zugeführt wird, verglichen.

Ergibt der Vergleich bei allen Komparatoren gleichzeitig Übereinstimmung, so werden die ausgelesenen Daten weitergegeben. Ein Hinweis, daß der Assoziativspeicher ebenfalls als Arbeitsspeicher mit geringerer Wortbreite für den Mikroprozessor verwendet werden kann, ist dieser Literaturstelle nicht zu entnehmen. Es fehlt auch jeder Hinweis, wie ein schneller Suchvorgang realisiert werden kann.

Aus der US-PS 4 145 737 ist ein weiterer Assoziativspeicher zu entnehmen, der mehrere, auch separat adressierbare Schreib-Lese-Speicher enthält.

Über ein Latch ist die Umschaltung auf paralleles Auslesen aller Schreib-Lese-Speicher möglich, deren ausgelesene Daten alle mit denselben am Schreib-Bus anliegenden Daten verglichen werden. Bei diesem Vergleich wird festgestellt, ob der Zahlenwert der ausgelesenen Daten kleiner, gleich oder größer als der Zahlenwert am Schreib-Bus ist. Eine Anregung zum Vergleich zwei gleich breiter Datenwörter ist nicht entnehmbar. Auch fehlt jeder Hinweis zur Realisierung eines schnellen Suchvorganges und ebenso ein Hinweis zur gleichzeitigen Verwendung als Arbeitsspeicher.

Aufgabe der Erfindung ist es, eine Anordnung anzugeben, mit der ein rasches Auffinden von mehreren Bytes langen Kennzeichenblöcken aus dem Arbeitsspeicher möglich ist.

Ausgehend von dem eingangs angegebenen Mikrorechnersystem wird die Aufgabe durch die im kennzeichnenden Teil des Patentanspruchs 1 angegebenen Merkmale gelöst.

Vorteilhafte Ausbildungen der Erfindung sind in den Unteransprüchen angegeben.

Bei dieser Anordnung wird der gesuchte Kennzeichenblock byteweise in Speicherstufen eingeschrieben. Aus dem Dateispeicherbereich des Arbeitsspeichers wird stets ein ganzer Kennzeichenblock ausgelesen und alle Bytes dieses Blockes werden gleichzeitig mit dem Kennzeichenblock verglichen, so daß der Suchvorgang mit optimaler Geschwindigkeit vor sich geht. Durch einen DMA-Controller wird der Suchvorgang nochmals wesentlich beschleunigt. Der nicht für die Datei benötigte Speicherbereich wird als üblicher ein Byte oder mehrere Bytes breiter Arbeitsspeicher (Schreib-Lese-Speicher) verwendet.

Die Schaltungsanordnung zeichnet sich durch geringen Aufwand aus. Alle b/a-Vergleichsstufen sind identisch aufgebaut. Der im Dateispeicherbereich gesuchte Kennzeichenblock muß nur einmal - vor Beginn des Suchvorganges - in die Speicherstufen eingeschrieben werden. Durch die Bustrennstufe werden die Schreib-Lese-Speicher für die Dauer des Suchvorganges vom Datenbus abgetrennt.

Ein erster Ausgang einer Suchmode-Adressen-Steuerung ist jeweils mit dem Auswahleingang (CS-Chip Select) eines der Schreib-Lese-Speicher verbunden und ein weiterer Eingang der Suchmode-Adressen-Steuerung ist an eine Steuerleitung angeschaltet, über die während des Suchvorganges alle Schreib-Lese-Speicher bzw. deren Dateispeicherbereiche aktiviert werden. Hierdurch ist sowohl eine herkömmliche Adressierung der Schreib-Lese-Speicher als auch das gleichzeitige Auslesen aller Bytes eines Kennzeichenblocks einer einzigen Adresse möglich.

Die Erfindung wird an Hand eines Ausführungsbeispiels näher erläutert.
Es zeigen
Fig. 1 ein Ausführungsbeispiel der Speicheranordnung,

Fig. 2 ein Prinzipschaltbild des Mikrorechnersystems,

Fig. 3 und Fig. 4 die Organisation des Arbeitsspeichers.

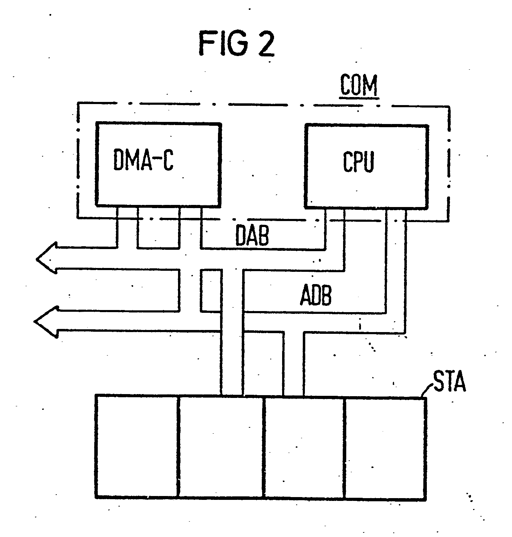

In Fig. 2 ist ein Mikroprozessorsystem dargestellt. Es enthält einen Mikrorechner COM. Dieser besteht aus einem Mikroprozessor CPU mit Programmspeicher, dessen Datenbus OAB und dessen Adressenbus ADB mit einem DMA-Controller DMA-C (Baustein für direkten Speicherzugriff - Direct Memory Access - z.B. Baustein Am 9517 der Fa. AMD, Sunnyvale, California) verbunden ist. Die Pfeile am Datenbus DAB und am Adressenbus ADB deuten an, daß noch weitere Bausteine, beispielsweise Ein-/Ausgabe-Bausteine mit dem Mikrorechner COM verbunden sind. Auf die Darstellung des Steuerbusses wurde aus Gründen der Übersichtlichkeit verzichtet. Als Datei- und Arbeitsspeicher, der an den Datenbus DAB und den Adressenbus ADB angeschaltet ist, dient die Speicheranordnung STA.

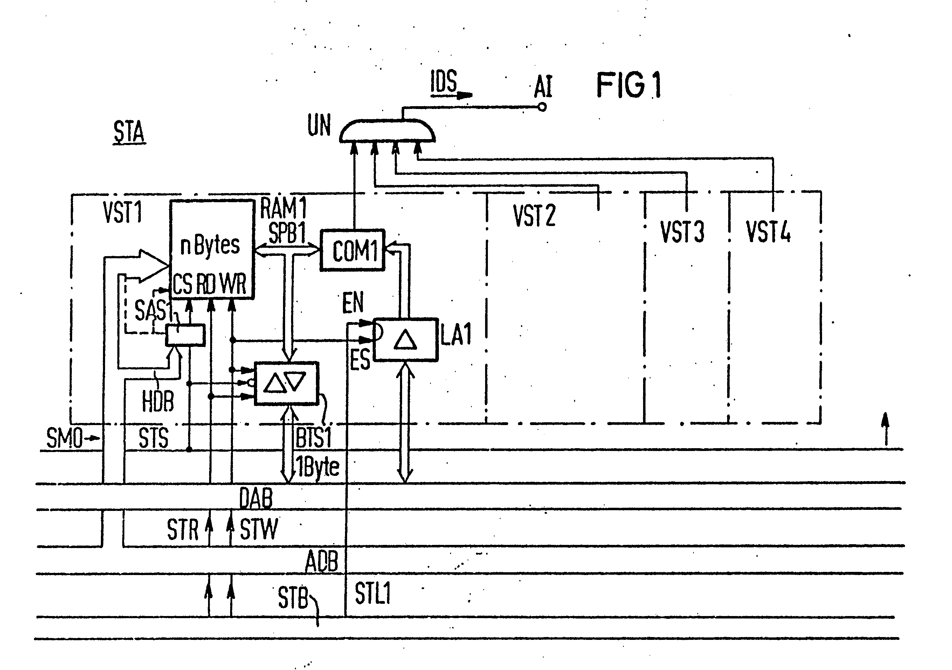

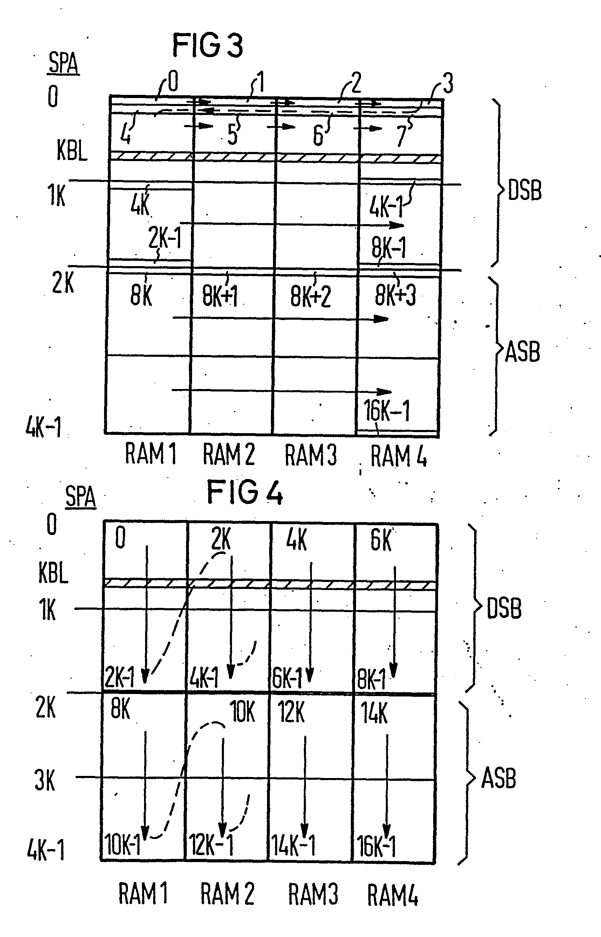

Die Speicheranordnung STA enthält einen Arbeitsspeicher SPA, dessen Organisation in Fig. 3 dargestellt ist. Der Arbeitsspeicher besteht aus vier Schreib-Lese-Speichern RAM 1-RAM4. Jeder Schreib-Lese-Speicher RAM1-RAM4 umfaßt einen Speicherbereich von 4 k - 1 Byte (k = 1024). Insgesamt umfaßt der Arbeitsspeicher SPA somit einen Speicherbereich 16 k . 1 Byte. Es wird angenommen, daß ein Kennzeichenblock KEL b = 4 Bytes breit ist und ein a = 1 Byte breiter Arbeitsspeicher benötigt wird. Infolgedessen wird der Arbeitsspeicher SPA in b/a = 4/ Bereiche (b/a = 2,3,4...) unterteilt, denen hier jeweils ein Speicherbaustein entspricht. Für den Datei-Speicherbereich DSB werden hier jeweils 2 k Bytes (relative Adresse 0 bis 2k-1) je Speicherbaustein, also insgesamt 8 k Bytes verwendet. Die 4k Bytes jedes Speicherbausteins RAM1-RAM4 (Fig. 1) werden mit den relativen Adressen 0 bis 4k-1 adressiert, die unmittelbar am Baustein anliegen. Die Unterscheidung zwischen den verschiedenen Speicherbausteinen erfolgt über Auswahleingänge (Chip-Select) oder durch entsprechende zusätzliche Adresseneingänge, über die jeweils ein Speicherbaustein aktiviert wird. Hier erfolgt die Ansteuerung der Bausteine durch die beiden niederwertigsten Bits der Speicheradresse über eine ein ache Codierschaltung. So wird das erste Byte des ersten Schreib-Lese-Speichers RAM1 mit 0 adressiert, das erste Byte des zweiten Schreib-Lese-Speichers RAM2 mit 1 adressiert, das erste Byte des dritten Schreib-Lese-Speichers RAM3 mit 2 (binär 0...0010) und so weiter bis zum lezten Byte des Datei-Speicherbereiches 8k-1. Werden alle Schreib-Lese-Speicher RAM1-RAM4 gleichzeitig über die Auswahl-Eingänge CS aktiviert, so können alle m-ten (m = 0 bis 2k-1) Bytes jedes Schreib-Lese-Speichers RAM1-RAM4 gleichzeitig ausgelesen werden. Das Auslesen von aufeinanderfolgenden Kennzeichenblöcken erfordert jedoch, da die beiden niederwertigsten Adressenbits ignoriert werden, jeweils eine schaltungsmäßig oder programmäßig vorgenommene Adressenerhöhung um 4. An den Dateispeicherbereich DSB schließt sich ein üblicher Arbeitsspeicherbereich ASB mit den Adressen 8k bis 16k-1 an, der die gleiche Adressierungsart aufweist.

In Fig. 4 ist eine weitere Möglichkeit für die Adressierung des Arbeitsspeichers SPA aufgezeigt. Von dem ersten Schreib-Lese-Speicher RAM1 werden die ersten 2k Bytes (Adresse 0 bis 2k-1) für den Dateispeicher verwendet. Ebenso wird bei den weiteren Schreib-Lese-Speichern RAM2 bis RAM4 verfahren. Der Adressenbereich für den Dateispeicher durchläufe bei byteweiser Adressierung 0 bis 2k-1 beim ersten Schreib-Lese-Speicher RAM1 und setzt sich mit der Adresse 2k beim zweiten Schreib-Lese-Speicher RAM2 fort. Mit der Adresse 2k wird das 1.Byte des zweiten Schreib-Lese-Speichers RAM2 angesprochen. Der Datei-Speicherbereich des zweiten Schreib-Lese-Speichers RAM2 umfaßt ebenfalls 2k Bytes und endet somit mit der Adresse 4k-1. Entsprechend umfaßt der Datei-Adressenbereich des dritten Schreib-Lese-Speichers RAM3 4k bis 6k-1 und der Datei-Adresseibereich des vierten Schreib-Lese-Speichers RAM4 6k bis 8k-1. Die Adressen der vier Bytes eines Kennzeichenblockes KBL unterscheiden sich durch jeweils 2k. Der Adressenbereich des herkömmlichen ein Byte breiten Arbeitsspeicherbereiches ASP umfaßt die Adressen 8k bis 16k-1; über diese Adressen sind jeweils 2k Bytes je Baustein mit den höherwertigeren Adressen zu erreichen. Werden die höherwertigen Bits der Speicheradresse ignoriert, so ist allen m-ten, z.B allen 1. Bytes der vier Schreib-Lese-Speicher RAM1 bis RAM4 dieselbe relative Adresse "0" gemeinsam. Dadurch ist wiederum das gleichzeitige Ansprechen aller m-ten Bytes (m = 0 bis 2k-1) beim Suchen bestimmter Kennzeichenblöcke mit einer einzigen Adresse möglich.

Die Umcodierung der Speicheradressen in die Adressen der Speicherbausteine wird von einem Codeumsetzer vorgenommen. In diesem Beispiel muß zusätzlich das dritthöchstwertige Bit zur Speicherbausteinadressierung umcodiert werden, wenn der Arbeitsspeicherbereich mit durchgehenden Adressen arbeiten soll. Das dritthöchstwertige Bit der relativen Speicherbausteinadresse unterscheidet - wie aus Fig. 4 ersichtlich - zwischen dem ersten und zweiten 2k Byte-Bereich eines Speicherbausteins.

Es ist natürlich auch eine andere Aufteilung der Speicherbereiche möglich. Der Datei-Speicherbereich kann ebenso in den mit höherwertigen Adressen ansprechbaren Bereich der Speicherbausteine gelegt werden. Auch können beispielsweise die ersten 4k Byte des ersten Schreib-Lese-Speichers RAM1 und die letzten 2k-Byte des zweiten Schreib-Lese-Speichers RAM2 (25 bis 4k-1) usw. als Datei- Speicher verwendet werden. Dies erfordert jedoch nur einen unnötig komplizierten Codeumsetzer zur Adressenumsetzung.

Ergänzend sei noch darauf hingewiesen, daß selbstverständlich auch vollständige Schreib-Lese-Speicherbausteine für den Datei-Speicher verwendet werden können, während andere Schreib-Lese-Speicherbausteine den Arbeisspeicherbereich bilden. Dies entspricht dem Fall, daß in Fig. 4 jeder Schreib-Lese-Speicher RAM1-RAM4 aus jeweil zwei 2k-Byte-Speicherbausteinen besteht. Bei dieser Anordnung müssen natürlich nur die Auswahleingänge CS, aber keine Adresseneingänge direkt an Speicherbaustein über eine entsprechende Codiereinrichtung angeschaltet werden.

In Fig. 1 ist ein Prinzipschaltbild der Speicheranordnung STA dargestellt. Diese Speicheranordnung STA enthält b/a =4/ (b/a = 2,3,4...) Vergleichsstufen VST1 bis VST4. Die erste Vergleichsstufe VST1 wurde ausführlich dargestellt. Sie enthält einen ersten Schreib-Lese-Speicher RAM1, dessen Adressen-Eingänge an den Adressenbus ADB angeschaltet sind. Die höherwertigsten Bits des Adressenbusses bei b/a =4 sind es bei einer Speicherorganisation nach Fig. 4 die drei höchstwertigen Bits - werden den Adressen-Eingängen einer Suchmode-Adressensteuerung SASI über einen Hilfsadressenbus HDB zugeführt. Bei einer Ausführung nach Fig. 4 sind es die drei höchstwertigen Bits. Die notwendige Adressenumcodierung bei der Verwendung eines einzigen Speicherbausteines für einen Schreib-Lese-Speicher wurde durch eine gestrichelte Linie von einem weiteren Ausgang der Suchmode-Adressensteuerung zu einem Adresseneingang des Speicherbausteines RAM1 angedeutet. Über eine Suchmode-Steuerleitung STS wird einem zweiten Eingang der Suchmode-Adressensteuerung SAS1 das Suchmode-Signal SMO zugeführt. Der Ausgang der ersten Suchmode-Adressensteuerung SAS1 ist mit dem Auswahleingang CS (Chip Select) des ersten Schreib-Lese-Speichers RAM1 verbunden. Der Lese-Eingang RD und der Schreib-Eingang WR des ersten Schreib-Lese-Speichers RAM1 ist über eine Lese-Steuerleitung STR und eine Schreib-Steuerleitung STW mit dem Steuerbus STB verbunden. Der Datenport (Datenbusanschlußleitungen) des ersten Schreib-Lese-Speichers RAM1 ist über einen Speicherbus SPB1 mit einem ersten Vergleicher COM1 und einer ersten Bustrennstufe BTS1 verbunden. Über die erste Bustrennstufe BTS1 ist der Speicherbus SPB1 mit dem Datenbus DAB verbunden. Alle Steuerleitungen STS, STR und STW sind mit Steuereingängen der Bustrennstufe BTS1 verbunden. Der Datenbus DAB ist über eine erste ein Byte breite Speicherstufe LA1 mit einem zweiten Eingang des Vergleichers COM1 verbunden. Ein Steuereingang ES der ersten Speicherstufe LA1 ist mit der Schreib-Steuerleitung STW verbunden. Der Steuereingang ES ist mit einem Aktivierungseingang EN (enable) verknüpft, der über eine Speicher-Steuerleitung STL1 mit dem Steuertus STB verbunden ist. Hierdurch ist es möglich, die Speicherstufen wahlweise durch ein Schreibsignal über die Steuerleitung STW zu laden. Die Speicher-Steuerleitung STL1 kann bei sinnvoller Adressierung auch durch die höherwertigen Adressenbits oder durch die Auswahleingänge CS der zugehörigen Schreib-Lese-Speicher ersetzt werden. Der erste Vergleicher COM1 hat einen Ausgang, der mit dem ersten Eingang eines UND-Gatters UN verbunden ist. Die weiteren Vergleichsstufen VST2 bis VST4 sind gleich aufgebaut. Sie unterscheiden sich allein in der Codierung der zugeordneten Suchmode-Adressensteuerung SAS. Die Ausgänge ihrer Vergleicher COM sind mit 3 weiteren Eingängen des DND-Gatters UN verbunden, an dessen Ausgang AI das Identitätssignal IDS abgegeben wird.

Bei dem Ausführungsbeispiel in Fig. 1 wird die in Fig. 4 dargestellte Organisation des Arbeitsspeichers verwendet. Das Suchverfahren läuft folgendermaßen ab: Zunächst werden die einzelnen Bytes eines gesuchten Kennzeichenblockes in die Speicherstufen LA (LA1 bis LA4) der Vergleichsstufen eingeschrieben. Dies erfolgt über den Datenbus DAB und einen Schreibbefehl, der über die Schreib-Steuerleitung STW den Speicherstufen zugeführt wird. Dann wird dem DMA-Controller vom Mikroprozessor CPU der Adressenbereich der Dabei übergeben, in diesem Fall 0 bis 2k-1. Während des Suchvorgangs - ein entsprechendes Suchmode-Signal SMO bewirkt die Abtrennung des Latenbusses DAB vom Speicherbus SPB1 durch die Bus-Trennstufe BTS1 - wird über die Suchmode-Adressen-Steuerung SAS1 der Schreib-Lese-Speicherbaustein RAM1 über seinen Auswahleingang CS angesprochen. Die höherwertigen Bits der Speicheradresse werden hierbei ignoriert. Gleichzeitig und in gleicher Weise erfolgt die Ansteuerung der weiteren Schreib-Lese-Speicher RAM2 bis RAM4 in den anderen Vergleichsstufen. Der Suchvorgang beginnt im allgemeinen mit der Adresse 0. Alle Schreib-Lese-Speicherbausteine RAM1 bis RAM4 sind hierbei von der gleichen Adresse 0 angesprochen und geben ihr erstes Byte über die Speicherbusse zum jeweils zweiten Eingang der Vergleicher COM1 bis COM4 ab. Das Auslesen erfolgt hierbei mit einem Lese-Signal, das über die Lese-Steuerleitung STR den Schreib-Lese-Speichern zugeführt wird. Ergeben die Vergleicher, daß der gesuchte Kennzeichenblock nicht ausgelesen wurde, so wird die Adresse vom DMA-Controller um 1 erhöht und über den Adressenbus ADB den Schreib-Lese-Speichern RAM1 bis RAM4 zugeführt. Jetzt werden die Bytes des folgenden Kennzeichenblocks ausgelesen. Dieser Vorgang wiederholt sich solange, bis alle Vergleicher Übereinstimmung zwischen den in den Zwischenspeichern LA1 bis LA4 eingespeicherten Bytes und den ausgelesenen Bytes melden oder der vorgegebene Adressenbereich überschritten ist. Diese Signale werden in dem UND-Gatter UN zusammengefaßt. Das UND-Gatter gibt das Identitätssignal IDS ab, das den Suchvorgang beendet.

Bei der normalen Verwendung der Schreib-Lese-Speicher wird die Bustrennung zwischen dem Datenbus DAS und den Speicherbussen SPB aufgehoben. Die Adressierung der einzelnen Schreib-Lese-Speicher RAM1 bis RAM4 erfolgt über den Adressenbus und die Suchmode-Adressen-Steuerung SAS. Somit können einzelne Bytes sowohl im Dateispeicherbereich als auch im Arbeitsspeicherbereich eingeschrieben und ausgelesen werden.

**Patentansprüche**

1. Mikrorechnersystem zur Datenverarbeitung und zum raschen Auffinden von in einem Dateispeicher gespeicherten je "b" Bytes umfassenden Kennzeichenblöcken (KBL) mit einem Mikroprozessor, dessen Arbeitsspeicher "a" Bytes breit ist, mit einem über einen Datenbus und einen Adressenbus angeschalteten DMA-Controller zum schnellen Auslesen des Arbeitsspeichers und mit "b/a" (b/a = 2,3,4...) Vergleicherstufen (VST1,...), die jeweils mindestens einen Schreib-Lese-Speicher (RAM1,...) und einem Vergleicher (COM1,...) enthalten, der jeweils über einen Speicherbus (SPB1,...) mit dem Datenport des Schreib-Lese-Speichers (RAM1,...) verbunden ist, _dadurch gekennzeichnet,_

daß der Dateispeicher ein Dateispeicherbereich (DSB) im Arbeitsspeicher (SPA) ist, der mindestens "b/a" Schreib-Lese-Speicher (RAM1,...) umfaßt, daß der Speicherbus (SPB1,...) in jeder Vergleicherstufe (VST1,...) an den Datenbus (DAB) über jeweils eine Bustrennstufe (BTS1,...) angeschlossen ist, die während des Suchvorganges von einem Suchmode-Signal (SMD) über eine Steuerleitung (STS) hochohmig (Three State) geschaltet wird,

daß jede Vergleichsstufe (VST1,...) eine "a" Bytes breite Speicherstufe (LA1,...) enthält, deren Ausgang an einen der Vergleicher (COM1,...) und deren Eingang an den Datenbus (DAB) angeschaltet ist, daß in jeder Vergleicherstufe eine Suchmode-Adressen-Steuerung (SAS1,...) vorgesehen ist, die einen ersten Ausgang aufweist, der mit dem Auswahleingang (CS - Chip Select) des Schreib-Lese-Speichers (RAM1,...) verbunden ist, die Adresseneingänge aufweist, die über einen Hilfsadressenbus (HDB) an den Adressenbus angeschaltet sind, und die einen weiteren an die Steuerleitung (STS) angeschalteten Eingang aufweist, über den während des Suchvorganges alle den Dateispeicherbereich (DSB) betreffenden Schreib Lese-Speicher (RAM1,...) aktiviert werden, und daß die Ausgänge aller Vergleicher (CDM1,...) auf eine Auswerteschaltung (UN) geführt sind, die beim Auffinden des gesuchten Kennzeichenblockes (KBL) ein Identitätssignal (IDS) abgibt, das den Suchvorgang beendet.

2. Mikrorechnersystem nach Anspruch 1, _dadurch gekennzeichnet,_ daß der Hilfsadressenbus (HDB) Speicheradressenleitungen für die höherwertigsten Bits enthält.

3. Mikrorechnersystem nach einem der vorhergehenden Ansprüche, _dadurch gekennzeichnet,_ daß für den Dateispeicherbereich (DSB) b/a x n (n = 1,2,3...) Speicherbausteine vorgesehen sind und daß für den Arbeitsspeicherbereich weitere Speicherbausteine vorgesehen sind.

4. Mikrorechnersystem nach einem der vorhergehenden Ansprüche, _dadurch gekennzeichnet,_ daß die Ausgänge der Vergleicher (CDM1,...) mit den Eingangen eines UND-Gatters (UN) verbunden sind.

5. Mikrorechnersystem nach einem der vorhergehenden Ansprüche, _dadurch gekennzeichnet,_ daß ein ein Byte breiter Arbeitsspeicher (SPA) verwendet wird.

6. Mikrorechnersystem nach einem der vorhergehenden Ansprüche, _dadurch gekennzeichnet,_ daß für jeden Schreib-Lese-Speicher (RAM1 bis RAM4) jeweils ein einziger Speicherbaustein vorgesehen ist, dessen mit den niederwertigsten Adressen (0 bis 2k-1) ansprechbarer Speicherbereich als Dateispeicherbereich (DSB) und der mit den höherwertigen Adressen ansprechbare Speicherbereich als Arbeitsspeicherbereich (ASB) verwendet wird.

7. Mikrorechnersystem nach einem der vorhergehenden Ansprüche, _dadurch gekennzeichnet,_ daß die Suchmode-Adressen-Steuerung (SAS1) weitere Ausgänge aufweist, die mit den höchstwertigen Adresseneingängen des zugeordneten Schreib-Lese-Speichers (RAM1) verbunden sind.

**Claims**

1. A microcomputer system for data processing and for rapidly finding blocks of characteristics (KBL) which are stored in a data file store and which each comprise "b" bytes, with a microprocessor whose working store has a width of "a" bytes, with a DMA-controller which is switched on via a data bus and an address bus and which serves rapidly to read the working store, with "b/a" (b/a 2,3,4...) comparator stages (VST1,...), each of which include at least one write-read store (RAM1,...) and a comparator (COM1,...) which is in each case connected via a store bus (SPB1,...) to the data port of the write-read store (RAM1,...),

_characterised in_ that the data file store is a data file store zone (DSB) in the working store (SPA) which comprises at least "b/a" write-read stores (RAM1,...), that the store bus (SPB1,...) in each comparator stage (VST1,...) is connected to the data bus (DAB) via a bus separating stage (BTS1,...) which, during the search process, is switched highly ohmic (three state) via a search mode signal (SMO) via a control line (STS),

that each comparator stage (VST1,...) includes a storage stage (OA1,...) which has a width of "a" bytes and whose output is connected to one of the comparators (COM1,...) and whose input is connected to the data bus (DAB), that each comparator stage includes a search mode address control unit (SAS1,...) which has a first output which is connected to the selector input (CS-chip select) of the write-read store (RAM1,...), which has address inputs which are connected via an auxiliary address bus (HDB) to the address bus and which has a further input which is connected to the control line (STS) and via which, during the search process, all the write-read stores (RAM1,...) relating to the data file store zone in question (DSB) are activated, and that the outputs of all the comparators (COM1,...) lead to an analysis circuit (UN) which, when the searched for characteristic block (KBL) is found, emits an identity signal (IDS) which terminates the search process.

2. A microcomputer system as claimed in claim 1, characterised in that the auxiliary address bus (HDB) includes store address lines for the higher value bits.

3. A microcomputer system as claimed in one of the preceding claims, characterised in that b/a x n (n = 1,2,3...) storage modules are provided for the data file storage zone (DSB) and that further storage modules are provided for the working store zone.

4. A microcomputer system as claimed in one of the preceding claims, characterised in that the outputs of the comparators (COM1,...) are connected to the inputs of an AND-gate (UN).

5. A microcomputer system as claimed in one of the preceding claims, characterised in that a working store (SPA) which has a width of one byte is used.

6. A microcomputer system as claimed in one of the preceding claims, characterised in that for each write-read store (RAM1 to RAM4) one single storage module is provided, of which the storage zone which responds to the lowest value addresses (0 to 2k-1) is used as data file storage zone (DSB) and of which the storage zone which responds to the higher value addresses is used as working storage zone (ASB).

7. A microcomputer system as claimed in one of the preceding claims, characterised in that the search mode-address-control unit (SAS1) has further outputs which are connected to the highest value address inputs of the assigned write-read store (RAM1).

**Revendications**

1. Système à microordinateur pour le traitement des données et pour la détection rapide de blocs de signes (KBL), qui comportent chacun "b" octets mémorisés dans une mémoire de fichiers, et comportant un microprocesseur, dont la mémoire de travail possède une largeur de "a" octets, un contrôleur DMA raccordé par l'intermédiaire d'un bus de transmission de données et d'un bus de transmission d'adresses et servant à effectuer une lecture rapide dans la mémoire de travail et "b/a" (b/a = 2, 3, 4,...) étages comparateurs (VST1, ...) qui contiennent chacun au moins une mémoire d'enregistrement et de lecture (RAM1,...) et un comparateur (COM1,...), qui est relié respectivement par l'intermédiaire d'un bus de mémoire (SPB1,...) à l'accès des données de la mémoire d'enregistrement et de lecture (RAM1,...), caractérisé par le fait que la mémoire de fichiers est une zone (DSB) de mémoire de fichiers dans la mémoire de travail (SPA), qui comporte au moins "b/a" mémoires d'enregistrement et de lecture (RAM1,...), que le bus de mémoire (STB1,...) est raccordé, dans chaque étage comparateur (VST1,...),au bus (DAB) de transmission de données par l'intermédiaire d'un étage respectif (BTS1,...) de séparation du bus, qui, pendant le processus de recherche,est branché par l'intermédiaire d'un signal (SMO) de mode de recherche à une forte valeur ohmique (Three State) par l'intermédiaire d'une ligne de commande (STS), que chaque étage comparateur (VST1, ...) contient un étage de mémoire (LA1,...) possédant une largeur de "a" octets et dont la sortie est raccordée à l'un des comparateurs (COM1,...) et dont l'entrée est raccordée au bus (DAB) de transmission de données, qu'il est prévu, dans chaque étage comparateur, un dispositif (SAS1,...) de commande d'adresses de mode de recherche, qui comporte une première sortie qui est reliée à l'entrée de sélection (CB-Chip Select) de la mémoire d'enregistrement et de lecture (RAM1,...), et comporte des entrées d'adresses, qui sont raccordées au bus de transmission d'adresses par l'intermédiaire d'un bus auxiliaire de transmission d'adresses (HDB), et comporte une autre entrée raccordée à la ligne de commande (STS) et par l'intermédiaire de laquelle, pendant le processus de recherche, toutes les mémoires d'enregistrement et de lecture (RAM1,...), qui concernent la zone (DSB) de mémoire de fichiers, sont activées, et que les sorties de tous les comparateurs (COM1,...) sont raccordées à un circuit d'évaluation (UN) qui délivre, lors de la détection du bloc de signes (KBL) recherché, un signal d'identité (IDS) qui arrête le processus de recherche.

2. Système à microordinateur suivant la revendication 1, caractérisé par le fait que le bus (HDB) de transmission d'adresses auxiliaires contient des lignes de transmission d'adresses de mémoire pour les bits de poids les plus élevés.

3. Système à microordinateur suivant l'une des revendications précédentes, caractérisé par le fait que pour la zone (DSB) de mémoire de fichiers, il est prévu b/a x n (n = 1, 2, 3,...) modules de mémoire et que pour la zone de mémoire de travail il est prévu d'autres modules de mémoire.

4. Système à microordinateur suivant l'une des revendications précédentes, caractérisé par le fait que les sorties des comparateurs (COM1,...) sont reliées aux entrées d'une porte ET (UN).

5. Système à microordinateur suivant l'une des revendications précédentes, caractérisé par le fait qu'on utilise une mémoire de travail (SPA) possédant une largeur d'un octet.

6. Système à microordinateur selon l'une des revendications précédentes, caractérisé par le fait que pour chaque mémoire d'enregistrement et de lecture (RAM1 à RAM4), il est prévu respectivement un seul module de mémoire, dont la zone de mémoire, qui peut être sollicitée avec les adresses (0 à 2k-1) de poids les plus bas est utilisée en tant que zone (DSB) de mémoire de fichiers et que la zone de mémoire, qui peut être sollicitée par les adresses de poids les plus élevés, est utilisée en tant que zone (ASB) de mémoire de travail.

7. Système à microordinateur suivant l'une des revendications précédentes, caractérisé par le fait que le dispositif (SAS1) de commande d'adresses du mode de recherche comporte d'autres sorties qui sont reliées aux entrées d'adresses de poids les plus élevés de la mémoire associée d'enregistrement et de lecture (RAM1).

FIG 1

# FIG 2

# FIG 3

SPA

0

KBL

1K

2K

4K-1

| 0 | 1 | 2 | 3 |
|---|---|---|---|
| 4 | 5 | 6 | 7 |
| | | | |
| 4K | | | 4K-1 |
| 2K-1 | | | 8K-1 |
| 8K | 8K+1 | 8K+2 | 8K+3 |
| | | | |
| | | | 16K-1 |

RAM 1   RAM 2   RAM 3   RAM 4

DSB

ASB

# FIG 4

SPA

0

KBL

1K

2K

3K

4K-1

| 0 | 2K | 4K | 6K |
|---|----|----|----|
| 2K-1 | 4K-1 | 6K-1 | 8K-1 |
| 8K | 10K | 12K | 14K |
| 10K-1 | 12K-1 | 14K-1 | 16K-1 |

RAM 1   RAM 2   RAM 3   RAM 4

DSB

ASB